# NEUE EUROPÄISCHE PATENTSCHRIFT

(11) **EP 2 900 766 B2**
(45) Veröffentlichungstag und Bekanntmachung des Hinweises auf die Entscheidung über den Einspruch: **16.10.2019**
(45) Hinweis auf die Patenterteilung: 24.08.2016
(21) Anmeldenummer: 13766539.4
(22) Anmeldetag: 25.09.2013
(51) Int. Cl.: C09D 1/04, C09D 5/08, C09D 183/08, C23C 22/62

(54) **PASSIVIERENDE ALKALISCHE ZUSAMMENSETZUNG BASIEREND AUF WASSERGLAS**
PASSIVATING ALKALINE COMPOSITION ON THE BASIS OF WATER GLASS
COMPOSITION DE PASSIVATION ALCALINE À BASE DE VERRE SOLUBLE

(30) Priorität: 28.09.2012 DE 102012217833
(43) Veröffentlichungstag der Anmeldung: 05.08.2015
(73) Patentinhaber: Henkel AG & Co. KGaA, 40589 Düsseldorf (DE)
(72) Erfinder: STODT, Jürgen, 41466 Neuss (DE); WOLPERS, Michael, 40699 Erkrath (DE); ROTH, Marcel, 40589 Düsseldorf (DE)
(86) Internationale Anmeldenummer: PCT/EP2013/069983
(87) Internationale Veröffentlichungsnummer: WO 2014/049000

(56) Entgegenhaltungen:
- EP-A1- 2 154 111
- DE-A1-102011 085 230
- US-A- 4 828 616
- "technische Information zu 77750 Kaliwasserglas", Kremer Pigmente,
- Roth: "Sicherheitsdatenblatt zu 3-Aminopropyltriethoxysilan", , 16 October 2014 (2014-10-16),
- Wikipedia, 'Ethanol'
- Wikipedia, 'Kaliumsilicat'
- "Sicherheitsdatenblatt zu N-(2--Aminoethyl)-3-aminopropyltriethoxysi lan", Gelest, 23 December 2014 (2014-12-23),
- Sigma-Aldrich: "N-(3-Trimethoxysilylpropyl)diethylentriam ine", , 2017,

## Beschreibung

Die vorliegende Erfindung betrifft eine alkalische wässrige Zusammensetzung auf Basis von Wasserglas und Organosilanen mit nicht hydrolysierbaren Substituenten, die eine primäre Amino-Gruppe im Substituenten aufweisen, zur Bereitstellung von korrosionsschützenden Überzügen auf Metalloberflächen, die in der Metallbearbeitung gute Umformeigenschaften vermitteln. Für die gewünschte Funktionalität enthalten die erfindungsgemäßen Zusammensetzungen das Organosilan und das Wasserglas in einem vorgegeben Verhältnis zueinander. Weiterhin betrifft die Erfindung ein Verfahren zur Vorbehandlung von Metalloberflächen unter Verwendung der alkalischen wässrigen Zusammensetzungen, wobei das Verfahren insbesondere auf Aluminium und auf mit Aluminium-legierten metallischen Überzügen versehenen Bandstahl hervorragende Ergebnisse hinsichtlich Korrosionsschutz, Lackhaftung und Umformbarkeit liefert.

Bei der Herstellung von metallischen Halbzeugen, beispielsweise von Metallband, Coils oder Blechen, werden diese vor einer Lagerung und dem Transport zum Abnehmer typischerweise mit einem temporären Korrosionsschutz versehen, der eine hohe Oberflächengüte des Metallbands beim Abnehmer der Halbzeuge gewährleisten soll. Der Hersteller dieser Halbzeuge spricht dann bei der Aufbringung eines korrosionsschützenden Überzuges von einem Transportschutz. Speziell bei schmelztauchveredelten Metallbändern, die im metallischen Überzug einen Legierungsanteil an Aluminium aufweisen, gilt es die Filiform-Korrosion, die durch wechselnde Witterungsbedingungen bei der Lagerung der Metallbänder begünstigt wird, effektiv zu unterdrücken. Der Transportschutz beschränkt sich jedoch nicht nur auf den Erhalt der Oberflächengüte des metallischen Halbzeugs während Lagerung und Transport und damit die Unterdrückung von Korrosionsphänomenen. Vielmehr soll der Transportschutz beim Abnehmer, der wiederum ein Hersteller von Bauelementen ist, mit den dort vorzunehmenden Fertigungsschritten kompatibel sein und bestenfalls so ausgerüstet sein, dass Fertigungsschritte erleichtert oder erspart werden. Dies gilt in besonderem Maße einerseits für beim Abnehmer vorzunehmende Umformprozesse, beispielsweise die Profilierung oder das Tiefziehen, und andererseits für eine der Umformung nachfolgende Reinigung der Metalloberflächen vor einer Beschichtung mit einem organischen Primer oder Pulverlack. So wird das metallische Halbzeug zu dessen Umformung bei Hersteller von Bauelementen zum Schutz der Metalloberflächen und der Umformwerkzeuge mit einer Metallbearbeitungsflüssigkeit benetzt, wobei die Kompatibilität mit dem Transportschutz gegeben sein muss, um einen niedrigen Reibungskoeffizienten bei der Profilierung oder beim Tiefziehen zu erzielen. Weiterhin wünscht der Hersteller der Bauelemente, dass der temporäre Korrosionsschutz nach der Reinigung der profilierten oder tiefgezogenen Halbzeuge zur Entfernung der Metallbearbeitungsflüssigkeit möglichst erhalten bleibt und darüber hinaus einen guten Haftgrund für die Aufbringung eines organischen Primers oder Pulverlackes darstellt, so dass auf einen Vorbehandlungsschritt auf der Seite des Herstellers der Bauelemente verzichtet werden kann.

Im Stand der Technik sind eine Vielzahl von Vorbehandlungsmethoden für Halbzeuge bekannt, die geeignete Überzüge für den Transportschutz liefern.

Die WO 00146310 lehrt den Korrosionsschutz von Metalloberflächen zu verbessern, indem Wasser enthaltende Zusammensetzungen, die eine Mischung von kondensierbaren Amino-substituierten Silanen und Polysilanen darstellen, auf die Metalloberflächen aufgebracht und getrocknet werden.

Die JP 56125464 hat die Ausbildung verschleißresistenter Beschichtungen auf Metalloberflächen mit Hilfe Silan-haltiger Zusammensetzungen zum Gegenstand und lehrt Zusammensetzungen enthaltend Epoxid-substituierte Silane, die als ausgehärtete Beschichtung eine hohe Oberflächenhärte aufweisen. Aus der JP56125464 erfährt der Fachmann, dass zusätzliche Mengen an Polydiolen in den dort beschriebenen Zusammensetzungen die Oberflächenhärte herabsetzen und die Elastizität der Beschichtung auf Metalloberflächen erhöhen.

Die EP 2284234 A1 lehrt eine erste korrosionsschützende Vorbehandlung von Metallbandoberflächen auf Basis von kondensierbaren Organosilanen, die zudem die Umformbarkeit des Kaltbandes, insbesondere in Tiefziehprozessen, ohne das Aufbringen weiterer Mittel gewährleistet. Hierfür werden Zusammensetzungen enthaltend eine Mischung von Organosilanen, die zumindest teilweise aus Aminosilanen bestehen, sowie Polyetherdiole, Polyesterdiole uind/oder Polycarbonatdiole offenbart, die zwingend einen hohen Anteil an leichtflüchtigen Alkoholen aufweisen.

Die EP221637 offenbart korrosionsfeste dünne Überzüge auf Basis von Wasserglas und Organosilanen, die sich insbesondere als Hochtemperaturbeschichtung eignen, wobei die Anwendungslösungen einen niedrigen Anteil an flüchtigen organischen Verbindungen aufweisen.

DE102011085230 offenbart eine wässerige Zusammensetzung enthaltend ein Natrium-, Kalium- und/oder Ammoniumwasserglass und mindestens ein Organosilan, wobei das Mengenverhältnis von Wasserglass zu Organosilan im Bereich 0,1:1 bis 2:1 liegt und das Silan eine oder mehrere Aminogruppen aufweist.

Trotz des umfangreichen Standes der Technik einerseits zu korrosionsschützenden Vorbehandlungen, die einen guten Transportschutz von metallischen Halbzeugen vermitteln, und andererseits zu solchen Vorbehandlungen, die Überzüge bilden, die bei der Verarbeitung metallischer Halbzeuge eine gute Umformbarkeit aufweisen, sind wenige Vorbehandlungen bekannt, die sowohl einen hervorragenden Transportschutz vermitteln als auch den Anforderungen der Hersteller von metallischen Bauelementen an Kompatibilität und Funktionalität der vorbehandelten Halbzeuge genügen.

Die Aufgabe der vorliegenden Erfindung besteht demnach darin, eine Zusammensetzung für die Vorbehandlung von metallischen Halbzeugen zu entwickeln, die einen hervorragenden Korrosionsschutz sowohl für Lagerung und Transport der Halbzeuge als auch für das fertig beschichtete Bauelement vermittelt. Hierfür muss der in der Vorbehandlung aufgebrachte korrosionsschützende Überzug die Fertigungsschritte des Herstellers der Bauelemente weitgehend unbeschadet überdauern und beispielsweise eine hohe Alkalibeständigkeit aufweisen, um bei der Entfernung von Metallbearbeitungsflüssigkeiten mit alkalischen Reinigersystemen nicht selbst angegriffen zu werden. Gleichzeitig sollen die korrosionsschützend vorbehandelten Halbzeuge einen guten Lackhaftgrund für die Beschichtung mit einem organischen Primer oder einem Pulverlack aufweisen. Beim Korrosionschutz ist dabei besonders darauf abzustellen, dass die Filiform-Korrosion von Halbzeugen aus Aluminium oder von Halbzeugen, die Aluminium legierte Überzüge aufweisen, aufgrund der Vorbehandlung mit erfindungsgemäßen Zusammensetzungen hinreichend unterbunden werden kann.

Ferner muss eine erfindungsgemäße Zusammensetzung Überzüge auf den Halbzeugen ausbilden, die kompatibel mit den Fertigungsprozessen beim Hersteller der Bauelemente sind und Umformprozesse der Halbzeuge, beispielsweise bei der Profilierung oder dem Tiefziehen, maximal unterstützen. Dies bedeutet insbesondere, dass mit erfindungsgemäßen Zusammensetzungen vorbehandelte metallische Halbzeuge nach Beaufschlagung mit wasserbasierten Metallbearbeitungsflüssigkeiten einen möglichst niedrigen Reibungskoeffizienten ermöglichen.

Darüber hinaus soll eine erfindungsgemäße Zusammensetzung speziell dafür geeignet sein, um in konventionellen Auftragsverfahren als Flüssigfilm auf das metallische Halbzeug, insbesondere auf Metallband, aufgebracht und eingetrocknet zu werden ("Dry-in-Place" Verfahren).

Dieses Aufgabenspektrum wird gelöst mittels einer alkalischen wasserbasierten Zusammensetzung zur Vorbehandlung metallischer Halbzeuge enthaltend
a) Wasserglas mit einem molaren Verhältnis von SiO₂ zu M₂O von zumindest 5 : 2, aber nicht mehr als 7 : 1, wobei M ausgewählt ist aus Alkalimetallen und/oder quarternären Ammoniumverbindungen;
b) ein oder mehrere Organosilane (A), die jeweils zumindest einen hydrolysierbaren Substituenten aufweisen, der bei Hydrolyse als Alkohol, der bei einem Atmosphärendruck von 1 bar einen Siedepunkt unterhalb von 100 °C aufweist, abgespalten wird, und die am jeweiligen Silizium-Atom ein bis drei nicht hydrolysierbare Substituenten tragen, die zumindest eine primäre Amino-Gruppe aufweisen, wobei die Gesamtzahl der Substituenten an den jeweiligen Siliziumatomen der Organosilane (A) vier ist,
wobei das molare Verhältnis von primären Amino-Gruppen der Organosilane (A) zur Gesamtmenge an Silizium-Atomen aus Wasserglas und Organosilanen mit jeweils zumindest einem hydrolysierbaren Substituenten zumindest 0,14, aber nicht mehr als 0,3 beträgt.

Der Begriff "metallisches Halbzeug" ist im Rahmen der Erfindung breiter gefasst als die Summe der im Stand der Technik bekannten Halberzeugnisse wie Metallblech, Metall-Coil oder Metallband und beschreibt sämtliche metallischen Gegenstände, die üblicherweise einem Umformprozess unterworfen werden, um ein korrespondierendes metallisches Bauteil zu ergeben.

Organosilane im Sinne der vorliegenden Erfindung weisen zumindest eine kovalente Si-C Bindung auf, über die ein sogenannter "nicht hydrolysierbarer Substituent" an das Silizium-Atom gebunden wird.

Werden die erfindungsgemäßen Zusammensetzungen unmittelbar auf metallischen Halbzeugen aufgebracht und eingetrocknet, so resultieren vor Korrosion schützende Überzüge mit hervorragenden Umformeigenschaften und sehr guter Kompatibilität zu konventionellen wasserbasierten Metallbearbeitungsflüssigkeiten. Außerdem ergeben sich sehr gute haftungsvermittelnde Eigenschaften des vor Korrosion schützenden Überzuges zu nachträglich aufgebrachten organischen Primerbeschichtungen, wobei mit organischen Primern oder Pulverlacken beschichtete Überzüge auf Halbzeugen mit Aluminium-legierten Metalloberflächen oder auf Aluminiumerzeugnissen eine nur geringe Neigung zur Filiform-Korrosion aufweisen.

Es zeigt sich überraschenderweise, dass ein relativ hoher Anteil an Organosilanen mit primären Amino-Gruppen relativ zum Gesamtanteil an Wasserglas und solchen Organosilanen, die jeweils zumindest einen hydrolysierbaren Substituenten aufweisen, notwendig ist für eine gute Umformbarkeit der metallischen Halbzeuge in der Bauteilefertigung. So zeigt sich beim Unterschreiten des vorgegebenen relativen Anteils an Organosilanen mit primären Amino-Gruppen, dass Aluminium-legierte Metalloberflächen oder Aluminiumoberflächen zwar hinreichend passiviert werden, jedoch liegt dann eine nur unzureichende Umformbarkeit der aufgebrachten und getrockneten Überzüge basierend auf alkalischen wasserbasierten Zusammensetzungen nach der Art der vorliegenden Erfindung vor. Umgekehrt tritt bei Erhöhung des relativen Anteils über den erfindungsgemäß vorgegebenen Anteil hinaus, eine deutliche Verschlechterung der Passivierung ein, so dass die Korrosionsschutzeigenschaften derartiger Überzüge auf metallischen Bauteilen, insbesondere auf Bauteilen, die aus Aluminium-legiertem Metallen oder aus Aluminium bestehen, unzureichend sind.
In diesem Zusammenhang sind für eine hervorragende Umformbarkeit metallischer Halbzeuge solche erfindungsgemäßen Zusammensetzungen zur Herstellung von korrosionsschützenden Überzügen auf metallischen Halbzeugen bevorzugt, für die das molare Verhältnis von primären Amino-Gruppen der Organosilane zur Gesamtmenge an Silizium-Atomen aus Wasserglas und Organosilanen mit jeweils zumindest einem hydrolysierbaren Substituenten zumindest 0,16, besonders bevorzugt zumindest 0,18, aber vorzugsweise nicht mehr als 0,26, besonders bevorzugt nicht mehr als 0,22 beträgt.

Für eine gute Verarbeitbarkeit der erfindungsgemäßen Zusammensetzungen und eine hinreichende Kondensation der anorganischen Silikate mit den organischen Silanen ist es bevorzugt, dass das molare Verhältnis von Silizium aus Wasserglas zu Silizium aus Organosilanen mit jeweils zumindest einem hydrolysierbaren Substituenten nicht kleiner als 2, besonders bevorzugt nicht kleiner als 2,5, und vorzugsweise nicht größer als 6, besonders bevorzugt nicht größer als 5 ist. Wird der relative Anteil an organischen Silanen zu groß, kann die Viskosität der erfindungsgemäßen Zusammensetzung soweit ansteigen, dass die Applikation derselben mit lacktypischen Auftragsverfahren problematisch wird. Umgekehrt können zu niedrige relative Anteile an organischen Silanen eine zu geringe Vernetzung der anorganischen Silikate ergeben, was sich wiederum negativ auf die korrosionsschützenden Eigenschaften von mit der Zusammensetzung hergestellten Schichtüberzügen auf metallischen Bauteilen auswirkt.

Der Anteil an Organosilanen (A) in der erfindungsgemäßen Zusammensetzung ist vorzugsweise sehr hoch bezogen auf die Gesamtmenge an Organosilanen mit jeweils zumindest einem hydrolysierbaren Substituenten, um die gewünschten Eigenschaften als getrockneter Überzug auf Metallen einen sehr guten Korrosionsschutz und Lackhaftung bei hervorragender Umformbarkeit vermitteln zu können. Daher sind solche erfindungsgemäßen Zusammensetzungen bevorzugt, für die das molare Verhältnis von Silizium aus Organosilanen (A) zu Silizium aus Organosilanen mit jeweils zumindest einem hydrolysierbaren Substituenten nicht kleiner als 0,8, besonders bevorzugt nicht kleiner als 0,9 ist.

Die Korrosionsschutzeigenschaften und die Lackhaftung zu nachträglich aufgebrachten organischen Primerbeschichtungen kann weiter verbessert werden, wenn die auf den metallischen Oberflächen aufgebrachten und eingetrockneten erfindungsgemäßen Zusammensetzungen solche Organosilane (A) enthalten, die mehrere Amino-Gruppen in den nicht hydrolysierbaren Substituenten aufweisen, wobei das Verhältnis von primären zu sekundären und tertiären Amino-Gruppen nicht größer als 0,8, vorzugsweise nicht größer als 0,5 ist.

Weiterhin bevorzugt sind in diesem Zusammenhang erfindungsgemäße Zusammensetzungen, die Organosilane (A) mit jeweils zumindest einem nicht hydrolysierbaren Substituenten enthalten, der eine Polyalkylenamin-Einheit mit zumindest zwei Amino-Gruppen aufweist, besonders bevorzugt mit zumindest drei Amino-Gruppen, wobei die Alkylen-Einheiten vorzugsweise aus nicht mehr als fünf Kohlenstoffatomen, insbesondere bevorzugt aus nicht mehr als vier Kohlenstoffatomen bestehen.

Die hydrolysierbaren Substituenten der Organosilane (A) spalten bei der Kondensation und/oder Hydrolyse Alkohole ab, die in erfindungsgemäßen Zusammensetzungen einen Siedepunkt von 100 °C bei einem Atmosphärendruck von 1 bar aufweisen. In bevorzugten Ausführungsformen sind die hydrolysierbaren Substituenten der Organosilane (A) der erfindungsgemäßen Zusammensetzungen daher ausgewählt aus Methoxy-, Ethoxy-. und/oder Propoxygruppen, insbesondere aus Methoxygruppen.

Besonders geeignete Vertreter der Organosilane (A) in erfindungsgemäßen Zusammensetzungen zur Herstellung korrosionsschützender Überzüge auf Aluminium-legierten Metalloberflächen und auf Aluminiumoberflächen sind ausgewählt aus Aminosilanen mit der allgemeinen Strukturformel (I):

H₂N-[(CH₂)ₘNH]_{y}(CH₂)ₙ-Si-X₃ (I)

wobei die Substituenten X jeweils unabhängig voneinander ausgewählt sind aus Alkoxy-Gruppen mit nicht mehr als vier, vorzugsweise nicht mehr als zwei Kohlenstoffatomen, wobei m und n jeweils unabhängig voneinander ganze Zahlen im Bereich von 1-4 sind und y eine ganze Zahl im Bereich von 0-8, vorzugsweise im Bereich von 1-5 ist. Bevorzugte Vertreter der Organosilane (A) nach der allgemeinen Strukturformel (I) sind 3-(Diethylentriamino)propyltrimethoxysilan, 3-(Ethylendiamino)propyltrimethoxysilan, 3-Aminopropyltrimethoxysilan, 3-(Diethylentriamino)propyltriethoxysilan, 3-(Ethylendiamino)propyltriethoxysilan und 3-Aminopropyltriethoxysilan, besonders bevorzugt ist 3-(Diethylentriamino)propyltrimethoxysilan.

Weiterhin können geringe Mengen an vernetzenden mehrkemigen Organosilanen die Korrosionsbeständigkeit von Überzügen basierend auf erfindungsgemäßen Zusammensetzungen verbessern, ohne dass sich dies nachteilig auf die Umformbarkeit derart beschichteter metallischer Bauteile auswirkt. Demnach können in einer bevorzugten erfindungsgemäßen Zusammensetzung zusätzlich zumindest zweikernige Organosilane enthalten sein, bei denen die Silyl-Einheiten jeweils zumindest zwei hydrolysierbare Substituenten aufweisen und über zumindest eine nicht hydrolysierbare Dialkylenamin-Einheit miteinander verbunden sind, besonders bevorzugt besteht die Dialkylenamin-Einheit dabei aus nicht mehr als 10 Kohlenstoffatomen. Bevorzugte Vetreter dieser mehrkernigen Organosilane sind Bis(3-triethoxysilylpropyl)amin, Bis(3-trimethoxysilylpropyl)amin.

Die in erfindungsgemäßen Zusammensetzungen enthaltenen Wassergläser sind aus einer Schmelze erstarrte, glasartige, also amorphe, wasserlösliche Silikate oder ihre wässrigen Lösungen. In erfindungsgemäßen Zusammensetzungen sind Wassergläser bevorzugt, in denen das molare Verhältnis von SiO₂ zu M₂O zumindest 5:2 beträgt, aber vorzugsweise nicht größer als 5 : 1 ist, wobei M ausgewählt ist aus Alkalimetallen und/oder quarternären Ammoniumverbindungen, besonders bevorzugt aus Kalium und/oder Natrium.

In der erfindungsgemäßen Zusammensetzung können zur weiteren Verbesserung des Blankkorrosionsschutzes, der für den Transportschutz ausschlaggebend ist, zusätzlich Aluminiumsalze enthalten sein, vorzugsweise solche Aluminiumsalze, die keine Quelle für Halogenid-Ionen sind, besonders bevorzugt Aluminate, beispielsweise NaAl(OH)₄. Die Erhöhung des Blankkorrosionsschutzes ist insbesondere auf elektrolytisch verzinktem Stahlband gegeben, aber in etwas geringerer Ausprägung auch auf schmelztauchverzinktem Stahlband.

Die erfindungsgemäße Zusammensetzung kann neben den Organosilanen mit jeweils zumindest einem hydrolysierbaren Substituenten zusätzliche Silane enthalten. Es ist in diesem Zusammenhang bevorzugt, dass erfindungsgemäße Zusammensetzungen nicht mehr als 0,2 Gew.-% an Silanen bezogen auf das Element Si enthalten, die jeweils vier hydrolysierbare Substituenten aufweisen, da derartige Silane die Vernetzung der Organosilane mit dem Wasserglas stark erhöhen, so dass bei höheren Anteilen an diesen Silanen keine stabilen oder applizierbaren Zusammensetzungen resultieren.

Der pH-Wert der erfindungsgemäßen Zusammensetzungen liegt vorzugsweise im Bereich von 9 bis 13, besonders bevorzugt im Bereich von 10 bis 12.

Die Erfindung betrifft ferner ein wasserbasiertes Konzentrat, das durch Verdünnung mit Wasser um den Faktor von bis zu 20 eine anwendungsfertige erfindungsgemäße Zusammensetzung ergibt.
Ein solches ebenfalls erfindungsgemäßes Konzentrat enthält
a) 15-50 Gew.-% bezogen auf SiO₂ an Wasserglas mit einem molaren Verhältnis von SiO₂ zu M₂O von zumindest 3 : 2, aber nicht mehr als 7 : 1, wobei M ausgewählt ist aus Alkalimetallen und/oder quarternären Ammoniumverbindungen;
b) 2-20 Gew.-% bezogen auf das Element Silizium an Organosilanen (A), die jeweils zumindest einen hydrolysierbaren Substituenten aufweisen, der bei Hydrolyse als Alkohol, der einen Siedepunkt unterhalb von 100 °C aufweist, abgespalten wird, und die am jeweiligen Silizium-Atom ein bis drei nicht hydrolysierbare Substituenten tragen, die zumindest eine primäre Amino-Gruppe aufweisen, wobei die Gesamtzahl der Substituenten an den jeweiligen Siliziumatomen der Organosilane (A) vier ist;
c) nicht mehr als 5 Gew.-% bezogen auf das Element Silizium an Organosilanen mit jeweils zumindest einem hydrolysierbaren Substituenten, die jedoch keine Organosilane (A) sind;
d) nicht mehr als 1 Gew.-% bezogen auf das Element Silizium an Organosilanen mit solchen hydrolysierbaren Substituenten, die bei ihrer Hydrolyse Halogenwasserstoffe abspalten;
e) nicht mehr als 1 Gew.-% bezogen auf das Element Aluminium an wasserlöslichen Aluminiumsalzen;
f) nicht mehr als 0,2 Gew.-% bezogen auf das Element Silizium an Silanen mit jeweils vier hydrolysierbaren Substituenten,
wobei das molare Verhältnis von primären Amino-Gruppen der Organosilane zu Silizium-Atomen aus Wasserglas und Organosilanen mit jeweils zumindest einem hydrolysierbaren Substituenten zumindest 0,14, aber nicht mehr als 0,3 beträgt.

Für die Komponenten des erfindungsgemäßen wasserbasierten Konzentrats gelten sinngemäß die zuvor genannten bevorzugten Ausführungsformen hinsichtlich der erfindungsgemäßen alkalischen wasserbasierten Zusammensetzung.

Erfindungsgemäße Konzentrate sind vorzugsweise erhältlich durch Zugabe einer entsprechenden Menge der Organosilane (A) und ggf. weiterer Organosilane, die keine Organosilane (A) sind, zu einer Wasser enthaltenden, klaren Lösung von zumindest 15 Gew.-% Wasserglas berechnet als SiO₂, wobei das Wasser enthaltende Gemisch nach der Zugabe der Menge der Organosilane solange bei einer Temperatur von 30-60 °C gerührt wird bis wiederum eine klare Lösung vorliegt. Eine klare Lösung liegt vor, wenn der Trübungswert (NTU) gemessen nach DIN ISO 7027 bei einer Wellenlänge von 860 nm im Streulichtverfahren bei einer Temperatur der Lösung von 30 °C unterhalb von 50 liegt.

Insbesondere sind die erfindungsgemäßen Konzentrate dadurch erhältlich, dass das Wasser enthaltende Gemisch nach der Zugabe der Organosilane solange erhitzt und ggf. vermindertem Druck ausgesetzt wird bis der Anteil an solchen Alkoholen, die bei einem Atmosphärendruck von 1 bar einen Siedepunkt unterhalb von 100 °C aufweisen, unterhalb von 1 g/l, besonders bevorzugt unterhalb von 100 ppm liegt.

Die vorliegende Erfindung umfasst ferner ein Verfahren zur Vorbehandlung von metallischen Halbzeugen vor einer Umformung zu einem metallischen Bauteil und Beschichtung desselben mit einem organischen Primer, bei dem zumindest ein Teil der Metalloberflächen des Halbzeugs mit einer erfindungsgemäßen Zusammensetzung, vorzugsweise mit einem mit Wasser verdünnten erfindungsgemäßen Konzentrat, derart in Kontakt gebracht werden, dass ein solcher Flüssigfilm auf diesem Teil der Metalloberflächen des Halbzeugs resultiert, der nach dem Eintrocknen, vorzugsweise bei erhöhter Temperatur, eine Schichtauflage auf diesem Teil der Metalloberflächen bezogen auf das Element Silizium von zumindest 5 mg/m², vorzugsweise von zumindest 20 mg/m², aber vorzugsweise nicht mehr als 300 mg/m², besonders bevorzugt nicht mehr als 100 mg/m² liefert.

Geeignete Auftragsverfahren sind aus dem Stand der Technik allgemein bekannt und umfassen insbesondere Walzenauftragsverfahren, Sprüh- und Tauchapplikationen.

Die Eintrocknung des auf der Metalloberfläche des Halbzeugs aufgebrachten Flüssigfilms erfolgt vorzugsweise bei einer Peak-Metal-Temperatur (PMT) im Bereich von 30-200 °C, besonders bevorzugt von 30-100 °C. Für die Eintrocknung eignet sich ebenfalls IR-Strahlung, so dass auch bei niedrigeren PMT eine Trocknung erfolgreich durchgeführt werden kann.

Im erfindungsgemäßen Verfahren vorbehandelte metallische Halbzeuge können vor einer weiteren Beschichtung mit einem organischen Primer leicht, d.h. unter minimalen Verschleiß der Umformwerkzeuge, beispielsweise im Presswerk, zum Bauteil umgeformt werden, ohne dass eine ggf. vorzunehmende vorherige Reinigung des Halbzeuges mit einem alkalischen Reiniger oder der Umformprozess selbst die korrosionsschützende Wirkung des Überzugs signifikant nachteilig beeinflusst.
Erfindungsgemäß sind daher solche Verfahren bevorzugt, bei denen nach dem Aufbringen des Flüssigfilms der erfindungsgemäßen Zusammensetzung, vorzugsweise des mit Wasser verdünnten erfindungsgemäßen Konzentrats, und nach dem Eintrocknen desselben, jedoch vor einer weiteren Beschichtung mit einem organischen Primer ein Umformprozess erfolgt.

Allgemein konnte festgestellt werden, dass Korrosionsschutz und Lackhaftung der in erfindungsgemäßen Verfahren auf den Halbzeugen aufgebrachten Überzüge sowie die Eigenschaften des Überzugs bei der Umformung zum Bauteil besonders deutlich verbessert werden, wenn die Metalloberflächen der Halbzeuge eine nasschemisch ermittelte Schichtauflage an Aluminium von zumindest 10 mg/m², vorzugsweise von zumindest 20 mg/m² bezogen auf das Element Aluminium aufweisen, so dass ein erfindungsgemäßes Verfahren unter Verwendung derartiger metallischer Halbzeuge bevorzugt ist. Die Ermittlung der Schichtauflage erfolgt nasschemisch durch Eintauchen der Metalloberflächen des Halbzeugs in eine 1 N Natronlauge bei 60 °C für 10 Sekunden, wobei das Blech beim Herausziehen aus der Natronlauge mit entionisiertem Wasser so abgespült wird, dass vom Halbzeug abtropfendes Spülwasser in die Natronlauge gelangt. Nach Bestimmung des Gesamtvolumens der Natronlauge, wird ein definiertes Probevolumen entnommen und der Aluminium-Gehalt im Probevolumen sodann mittels optischer Emmissionsspektroskopie mit induktiv gekoppeltem Argon-Plasma (ICP-OES) bestimmt und auf das Gesamtvolumen hochgerechnet und zur Ermittlung der Schichtauflage auf die Gesamtoberfläche des metallischen Halbzeugs normiert.

Das erfindungsgemäße Verfahren eignet sich demnach hervorragend für die Vorbehandlung von Halbzeugen aus Aluminium und seinen Legierungen oder von Halbzeugen aus Stahl, die mit Aluminium legierten metallischen Überzügen versehen sind. Für das erfindungsgemäße Verfahren geeignete Halbzeuge aus Stahl, die mit Aluminium legierten metallischen Überzügen versehen sind, sind insbesondere schmelztauchveredelte Bandstähle wie feuerverzinkter Bandstahl (Z), Zink-Magnesium-Aluminium Bandstahl (ZM), Galfan (ZA), Galvalume (AZ) und feueraluminierter Bandstahl (AS) bevorzugt, besonders bevorzugt ist wiederum feuerverzinkter Bandstahl (Z) und Galvalume (AZ). Auf diesen ausgewählten metallischen Halbzeugen werden im erfindungsgemäßen Verfahren Überzüge erzeugt, die sowohl einen sehr guten Korrosionschutz und Lackhaftung zu nachträglich aufgebrachten organischen Primerbeschichtungen als auch eine hervorragende Umformbarkeit bei der Herstellung entsprechender Bauteile vermitteln.

Ein besonders bevorzugtes erfindungsgemäßes Verfahren zur Herstellung von oberflächenbehandelten Bauteilen aus schmelztauchveredeltem Bandstahl umfasst die aufeinanderfolgenden Schritte a)-e):
a) In-Kontakt-Bringen des schmelztauchveredelten Bandstahls mit einer erfindungsgemäßen Zusammensetzung oder mit einem mit Wasser verdünnten erfindungsgemäßen Konzentrat derart, dass ein solcher Flüssigfilm auf dem schmelztauchveredelter Bandstahl resultiert, der nach dem Eintrocknen, vorzugsweise bei erhöhter Temperatur, eine Schichtauflage bezogen auf das Element Silizium von zumindest 5 mg/m², vorzugsweise von zumindest 20 mg/m², aber vorzugsweise nicht mehr als 300 mg/m², besonders bevorzugt nicht mehr als 100 mg/m² liefert;
b) Aufbringen einer wassermischbaren Metallbearbeitungsflüssigkeit auf dem schmelztauchveredelten Bandstahl;
c) Umformen, vorzugsweise Profilierung, des schmelztauchveredelten Bandstahls zum Bauteil;
d) Reinigen des Bauteils, vorzugsweise mit einem wasserbasierten neutralen oder alkalischen Reiniger;
e) Aufbringen eines organischen Primers oder Pulverlacks auf das Bauteil.

Schmelztauchveredelter Bandstahl weist in dieser Prozessfolge vorzugsweise ein nasschemisch ermitteltes Schichtgewicht bezogen auf das Element Aluminium von zumindest 10 mg/m², besonders bevorzugt von zumindest 20 mg/m² auf.

Wassermischbare Metallbearbeitungsflüssigkeiten sind insbesondere Öl-in-Wasser Emulsionen.

Zwischen den Einzelschritten a)-e) können weitere Spül- und Reinigungsschritte liegen und zwischen den Schritten d) und e) zusätzlich eine nasschemische passivierende Vorbehandlung mit einer wässrigen Zusammensetzung.

### Ausführungsbeispiele:

Es wurden verschiedene schmelztauchverzinkte Stahlbleche mit alkalischen wässrigen Zusammensetzungen gemäß der Tabelle 1 durch vorbehandelt, indem zunächst ein Flüssigfilm mittels Quetschcoater aufgebracht und anschließend bei 40 °C eingetrocknet wurde. Hierbei wurde über die Flüssigfilmdicke ein Schichtgewicht bezogen auf das Element Silizium von 50 - 60 mg/m² eingestellt. Das Schichtgewicht konnte mittels Röntgenfluoreszenzanalyse (RFA) bestimmt werden.

Die derart vorbehandelten Bleche wurden einem Blankkorrosionstest gemäß DIN EN ISO 9227 unterworfen.

Andere Bleche wurden unmittelbar nach dem Aufbringen des Überzugs mittels der alkalischen Zusammensetzungen mit einem Polyester-basierten Pulverlack (Fa. TIGER Coatings) versehen. Dabei wurde eine Lackschichtdicke von 80 µm eingestellt.

Die mit dem Pulverlack beschichteten Bleche wurden einem Kondenswasser-Klima-Test unterworfen und anschließend mit einer Erichsen-Vertiefung versehen. Die Lackhaftung am Gitterschnitt über der Vertiefung wurde gemäß DIN EN ISO 2409 bestimmt.

| Tab.1 | | | | | |
|---|---|---|---|---|---|
| Korrosionsergebnisse in der Blankkorrosion und Lackhaftung nach Pulverlackbeschichtung von mittels verschiedener alkalischer Zusammensetzungen aufgebrachter Überzüge auf schmelztauchverzinkten Stahlblechen (Fa. TKS, Beeckerwerth FBA4) | | | | | |

| Nr. | M₂O·SiO₂¹ Gew.-% SiO₂ | Silan Gew.-% | NH₂/Si* | SST** % | Gitterschnitt*** 0-5 |
|---|---|---|---|---|---|
| 1 | 20,9 | - | n.d. | 50-80 | 5 |
| 2 | 20,9 | 5 | 0,05 | 5 | 1-2 |
| 3 | 20,9 | 18 | 0,16 | 1 | 0 |
| 4 | - | 95%² | n.d. | 30-60 | 4 |
| 1 Kaliwasserglas 28/30 (8,1 Gew.-% K₂O; 20,9 Gew.-% SiO₂) | | | | | |
| 2 restlichen 5 Gew.-% sind 10%ige NH₃-Lösung | | | | | |
| * molares Verhältnis primärer Amino-Gruppen zu Silizium aus Wasserglas und Silan | | | | | |
| ** 48h Salzsprühtest nach DIN EN ISO 9227; Beurteilung des Flächenanteils an Weißrost | | | | | |
| *** 3 Tage Auslagerung im Kondenswasserklimatest nach DIN EN ISO 6270-2 CH und anschließende Beurteilung der Lackhaftung im Gitterschnitt gemäß DIN EN ISO 2409 nach Erichsen-Tiefung (6mm) | | | | | |

Aus der Tabelle 1 kann entnommen werden, dass eine erfindungsgemäße Zusammensetzung (Beispiel Nr. 3) sowohl in der Blankkorrosion als auch bezüglich der Lackhaftung die besten Testergebnisse lieferte. Alkalische Zusammensetzungen enthaltend Wasserglas und Aminosilan in einem nicht erfindungsgemäßen Mengenverhältnis (Beispiel Nr. 2) fielen demgegenüber in beiden Testmethoden ab. Der synergistische Effekt von alkalischen Zusammensetzungen, die ein Gemisch von Wasserglas und Aminosilanen enthalten, wird im Vergleich mit alkalischen Zusammensetzungen enthaltend jeweils Wasserglas (Beispiel Nr. 1) oder das Aminosilan (Beispiel Nr. 4) deutlich.

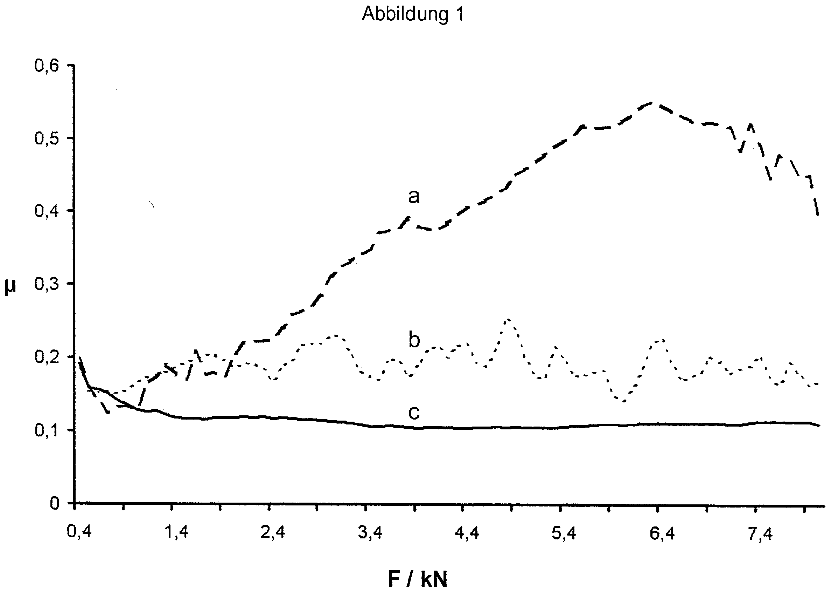

Weiterhin wurden Bleche, die Überzüge der Zusammensetzungen gemäß der Beispiele Nr. 2 und Nr. 3 mit einem Schichtgewicht bezogen auf das Element Silizium von 50 - 60 mg/m² aufwiesen, bezüglich ihres tribologischen Verhaltens im Streifenzugtest vermessen. Dazu wurden die Bleche mit einer Metallbearbeitungsflüssigkeit (Multan ES 184 B; Fa. Henkel AG & Co. KGaA) benetzt und zwischen zwei flächigen Metallbacken mit eingespannt. Die Bleche wurden unter steigender Krafteinwirkung in Einspannrichtung mit konstanter Geschwindigkeit aus der Einspannung durch die Metallbacken herausbewegt und die dafür benötigte Kraft gemessen. Die Abbildung 1 gibt den im Streifenzugtest bestimmten Gleitreibungskoeffizienten in Abhängigkeit von der Einspannkraft wieder.
Es wird deutlich, dass eine erfindungsgemäße Zusammensetzung (Beispiel Nr. 3, Kurve c in Abbildung 1) als Überzug auf den Stahlblechen einen über den gemessenen Zugkraftbereich nahezu konstant niedrigen Gleitreibungskoeffizienten bewirkt und somit gute Umformeigenschaften beispielsweise bei der Profilierung der Bleche vermittelt. Die Kompatibilität der Vorbehandlung mit Umformprozessen in der Bauteilefertigung ist damit auf Basis einer erfindungsgemäßen Zusammensetzung gegeben. Für eine nicht erfindungsgemäße Zusammensetzung (Beispiel Nr. 2, Kurve a in Abbildung 1) als Überzug resultiert im Streifenzugtest ein deutlicher Anstieg des Gleitreibungskoeffizienten mit steigender Zugkraft, so dass derartige Überzüge der Metallbearbeitung einen höheren Widerstand entgegensetzen und bei der Umformung eine stärkere Beschädigung der Oberflächen des Stahlbands und der Umformwerkzeuge hervorrufen. Gänzlich unbehandelte Stahlbleche (Kurve b in Abbildung 1) weisen ebenfalls einen höheren Gleitreibungswiderstand als erfindungsgemäß behandelte auf, wobei zusätzlich periodische Instabilitäten auftreten, die trotz verhältnismäßig niedrigem Reibungskoeffizienten einen beträchtlichen Werkzeugverschleiß beim Umformen verursachen.

## Patentansprüche

1. Alkalische wasserbasierte Zusammensetzung enthaltend
a) Wasserglas mit einem molaren Verhältnis von SiO₂ zu M₂O von zumindest 5 : 2, aber nicht mehr als 7 : 1, wobei M ausgewählt ist aus Alkalimetallen und/oder quarternären Ammoniumverbindungen;
b) ein oder mehrere Organosilane (A), die jeweils zumindest einen hydrolysierbaren Substituenten aufweisen, der bei Hydrolyse als Alkohol, der bei einem Atmosphärendruck von 1 bar einen Siedepunkt unterhalb von 100 °C aufweist, abgespalten wird, und die am jeweiligen Silizium-Atom ein bis drei nicht hydrolysierbare Substituenten tragen, die zumindest eine primäre Amino-Gruppe aufweisen, wobei die Gesamtzahl der Substituenten an den jeweiligen Siliziumatomen der Organosilane (A) vier ist,
wobei das molare Verhältnis von primären Amino-Gruppen der Organosilane (A) zur Gesamtmenge an Silizium-Atomen aus Wasserglas und Organosilanen mit jeweils zumindest einem hydrolysierbaren Substituenten zumindest 0,14, aber nicht mehr als 0,3 beträgt.

2. Zusammensetzung gemäß Anspruch 1, **dadurch gekennzeichnet, dass** das molare Verhältnis von primären Amino-Gruppen der Organosilane (A) zur Gesamtmenge an Silizium-Atomen aus Wasserglas und Organosilanen mit jeweils zumindest einem hydrolysierbaren Substituenten zumindest 0,16, vorzugsweise zumindest 0,18, aber vorzugsweise nicht mehr als 0,26, besonders bevorzugt nicht mehr als 0,22 beträgt.

3. Zusammensetzung gemäß einem oder beiden der vorherigen Ansprüche, **dadurch gekennzeichnet, dass** die Organosilane (A) mehrere Amino-Gruppen in den nicht hydrolysierbaren Substituenten aufweisen, wobei das Verhältnis von primären zu sekundären und tertiären Amino-Gruppen nicht größer als 0,8, vorzugsweise nicht größer als 0,5 ist.

4. Zusammensetzung nach Anspruch 3, **dadurch gekennzeichnet, dass** die Organosilane (A) jeweils zumindest einen nicht hydrolysierbaren Substituenten enthalten, der eine Polyalkylenamin-Einheit mit zumindest zwei Amino-Gruppen aufweist, vorzugsweise mit zumindest drei Amino-Gruppen, wobei die Alkylen-Einheiten vorzugsweise aus nicht mehr als fünf Kohlenstoffatomen, besonders bevorzugt aus nicht mehr als vier Kohlenstoffatomen bestehen.

5. Zusammensetzung gemäß einem oder mehreren der Ansprüche 3 bis 5, **dadurch gekennzeichnet, dass** die Organosilane (A) ausgewählt sind aus Aminosilanen mit der allgemeinen Strukturformel (I):
H₂N-[(CH₂)ₘNH]_{y}(CH₂)ₙ-Si-X₃ (I)
wobei die Substituenten X jeweils unabhängig voneinander ausgewählt sind aus Alkoxy-Gruppen mit nicht mehr als vier, vorzugsweise nicht mehr als zwei Kohlenstoffatomen,
wobei m und n jeweils unabhängig voneinander ganze Zahlen im Bereich von 1-4 sind und y eine ganze Zahl im Bereich von 0-8, vorzugsweise im Bereich von 1-5 ist.

6. Zusammensetzung nach einem oder mehreren der vorherigen Ansprüche, **dadurch gekennzeichnet, dass** das molare Verhältnis von Silizium aus Wasserglas zu Silizium aus Organosilanen mit jeweils zumindest einem hydrolysierbaren Substituenten nicht kleiner als 2, vorzugsweise nicht kleiner als 2,5, und vorzugsweise nicht größer als 6, besonders bevorzugt nicht größer als 5 ist.

7. Zusammensetzung nach einem oder mehreren der vorherigen Ansprüche, **dadurch gekennzeichnet, dass** das molare Verhältnis von Silizium aus Organosilanen (A) zu Silizium aus Organosilanen mit jeweils zumindest einem hydrolysierbaren Substituenten nicht kleiner als 0,8, vorzugsweise nicht kleiner als 0,9 ist.

8. Wasserbasiertes Konzentrat enthaltend
a) 15-50 Gew.-% bezogen auf SiO₂ an Wasserglas mit einem molaren Verhältnis von SiO₂ zu M₂O von zumindest 3 : 2, aber nicht mehr als 7 : 1, wobei M ausgewählt ist aus Alkalimetallen und/oder quarternären Ammoniumverbindungen;
b) 2-20 Gew.-% bezogen auf das Element Silizium an Organosilanen (A), die jeweils zumindest einen hydrolysierbaren Substituenten aufweisen, der bei Hydrolyse als Alkohol, der einen Siedepunkt unterhalb von 100 °C aufweist, abgespalten wird, und die am jeweiligen Silizium-Atom ein bis drei nicht hydrolysierbare Substituenten tragen, die zumindest eine primäre Amino-Gruppe aufweisen, wobei die Gesamtzahl der Substituenten an den jeweiligen Siliziumatomen der Organosilane (A) vier ist;
c) nicht mehr als 5 Gew.-% bezogen auf das Element Silizium an Organosilanen mit jeweils zumindest einem hydrolysierbaren Substituenten, die jedoch keine Organosilane (A) sind;
d) nicht mehr als 1 Gew.-% bezogen auf das Element Silizium an Organosilanen mit solchen hydrolysierbaren Substituenten, die bei ihrer Hydrolyse Halogenwasserstoffe abspalten;
e) nicht mehr als 1 Gew.-% bezogen auf das Element Aluminium an wasserlöslichen Aluminiumsalzen,
f) nicht mehr als 0,2 Gew.% bezogen auf das Element Silizium an Silanen mit jeweils vier hydrolysierbaren Substituenten
wobei das molare Verhältnis von primären Amino-Gruppen der Organosilane zu Silizium-Atomen aus Wasserglas und Organosilanen mit jeweils zumindest einem hydrolysierbaren Substituenten zumindest 0,14, aber nicht mehr als 0,3 beträgt.

9. Verfahren zur Vorbehandlung von metallischen Halbzeugen vor einer Umformung zu einem metallischen Bauteil und Beschichtung des Bauteils mit einem organischen Primer, **dadurch gekennzeichnet, dass** man zumindest einen Teil der Metalloberflächen des Halbzeugs mit einem mit Wasser verdünnten Konzentrat gemäß Anspruch 8 derart in Kontakt bringt, dass ein solcher Flüssigfilm auf diesem Teil der Metalloberflächen des Halbzeugs resultiert, der nach dem Eintrocknen eine Schichtauflage auf diesem Teil der Metalloberflächen bezogen auf das Element Silizium von zumindest 5 mg/m², vorzugsweise zumindest 20 mg/m², aber nicht mehr als 300 mg/m², vorzugsweise nicht mehr als 100 mg/m² liefert.

10. Verfahren gemäß Anspruch 9, **dadurch gekennzeichnet, dass** die metallischen Halbzeuge gefertigt sind aus Aluminium und seinen Legierungen oder mit Aluminium legierte metallische Überzüge auf Stahl darstellen.

## Claims

1. An alkaline water-based composition containing
a) water glass having a molar ratio of SiO₂ to M₂O of at least 5 : 2, but no more than 7 : 1, wherein M is selected from alkali metals and/or quaternary ammonium compounds;
b) one or more organosilanes (A) which each comprise at least one hydrolyzable substituent that, during hydrolysis, is split off as an alcohol that has a boiling point below 100 °C at an atmospheric pressure of 100 kPa (1 bar), and which carry on each silicon atom one to three non-hydrolyzable substituents that comprise at least one primary amino group, wherein the total number of substituents on the respective silicon atoms of the organosilanes (A) is four,
wherein the molar ratio of primary amino groups of the organosilanes (A) to the total number of silicon atoms from water glass and organosilanes each having at least one hydrolyzable substituent is at least 0.14, but no more than 0.3.

2. The composition according to claim 1, **characterized in that** the molar ratio of primary amino groups of the organosilanes (A) to the total number of silicon atoms from water glass and organosilanes each having at least one hydrolyzable substituent is at least 0.16, preferably at least 0.18, but preferably no more than 0.26, more preferably no more than 0.22.

3. The composition according to one or both of the preceding claims, **characterized in that** the organosilanes (A) comprise several amino groups in the non-hydrolyzable substituents, the ratio of primary to secondary and tertiary amino groups being no greater than 0.8, preferably no greater than 0.5.

4. The composition according to claim 3, **characterized in that** the organosilanes (A) each contain at least one non-hydrolyzable substituent that comprises a polyalkylene amine unit having at least two amino groups, preferably having at least three amino groups, the alkylene units preferably consisting of no more than five carbon atoms, more preferably of no more than four carbon atoms.

5. The composition according to one or more of claims 3 to 5, **characterized in that** the organosilanes (A) are selected from aminosilanes having the general structural formula (I):
H₂N-[(CH₂)ₘNH]_{y}(CH₂)ₙ-Si-X₃ (I)
the substituents X each being selected independently of one another from alkoxy groups having no more than four, preferably no more than two, carbon atoms,
m and n each being, independently of one another, integers in the range of from 1-4 and y being an integer in the range of from 0-8, preferably in the range of from 1-5.

6. The composition according to one or more of the preceding claims, **characterized in that** the molar ratio of silicon from water glass to silicon from organosilanes each having at least one hydrolyzable substituent is no smaller than 2, preferably no smaller than 2.5, and preferably no greater than 6, more preferably no greater than 5.

7. The composition according to one or more of the preceding claims, **characterized in that** the molar ratio of silicon from organosilanes (A) to silicon from organosilanes each having at least one hydrolyzable substituent is no smaller than 0.8, preferably no smaller than 0.9.

8. A water-based concentrate containing
a) 15-50 wt.%, based on SiO₂, of water glass having a molar ratio of SiO₂ to M₂O of at least 3 : 2, but no more than 7 :1, wherein M is selected from alkali metals and/or quaternary ammonium compounds;
b) 2-20 wt.%, based on the element silicon, of organosilanes (A) which each comprise at least one hydrolyzable substituent that, during hydrolysis, is split off as an alcohol that has a boiling point below 100 °C, and which carry on each silicon atom one to three non-hydrolyzable substituents which comprise at least one primary amino group, wherein the total number of substituents on the respective silicon atoms of the organosilanes (A) is four;
c) no more than 5 wt.%, based on the element silicon, of organosilanes each having at least one hydrolyzable substituent, but are not organosilanes (A);
d) no more than 1 wt.%, based on the element silicon, of organosilanes having hydrolyzable substituents of this type which eliminate hydrogen halides during their hydrolysis;
e) no more than 1 wt.%, based on the element aluminum, of water-soluble aluminum salts,
f) no more than 0.2 wt.%, based on the element silicon, of silanes each having four hydrolyzable substituents,
wherein the molar ratio of primary amino groups of the organosilanes to silicon atoms from water glass and organosilanes each having at least one hydrolyzable substituent is at least 0.14, but no more than 0.3.

9. A method for pretreating semi-finished metal products prior to shaping to form a metal component, and coating the component with an organic primer, **characterized in that** at least one part of the metal surfaces of the semi-finished product is brought into contact with a water-diluted concentrate according to claim 8 such that a liquid film of this type results on this part of the metal surfaces of the semi-finished product, which liquid film provides, after drying, a coating layer on this part of the metal surfaces based on the element silicon of at least 5 mg/m², preferably at least 20 mg/m², but no more than 300 mg/m², preferably no more than 100 mg/m².

10. The method according to claim 9, **characterized in that** the semi-finished metal products are made from aluminum and alloys thereof or are metal coatings on steel that are alloyed using aluminum.

## Revendications

1. Composition alcaline à base d'eau comprenant
a) du verre soluble avec un rapport molaire SiO₂ sur M₂O d'au moins 5:2, mais non supérieur 7:1, M étant choisi parmi les métaux alcalins et/ou les composés d'ammonium quaternaire ;
b) un ou plusieurs organosilanes (A) qui comportent chacun au moins un substituant hydrolysable qui est éliminé lors de l'hydrolyse sous forme d'alcool qui a un point d'ébullition inférieur à 100°C à une pression atmosphérique de 100 kPa (1 bar), et qui portent au niveau de chaque atome de silicium, un à trois substituants non hydrolysable qui possèdent au moins un groupe amino primaire, le nombre total de substituants au niveau des atomes de silicium respectifs des organosilanes (A) est de quatre, le rapport molaire groupes amino primaires des organosilanes (a) sur quantité totale d'atomes de silicium de verre soluble et d'organosilanes, qui comportent chacun au moins un substituant hydrolysable, étant d'au moins 0,14, mais non supérieur 0,3.

2. Composition selon la revendication 1, **caractérisée en ce que** le rapport molaire groupes amino primaires d'organosilanes (A) sur quantité totale d'atomes de silicium de verre soluble et d'organosilanes, qui comportent chacun au moins un substituant hydrolysable, étant d'au moins 0,16, de préférence d'au moins 0,18, mais de préférence non supérieur à 0,26, de manière particulièrement préférée non supérieur à 0,22.

3. Composition selon l'une des revendications précédentes ou les deux, **caractérisée en ce que** les organosilanes (A) comportent une pluralité de groupes amino dans les substituants non hydrolysables, le rapport groupes amino primaires sur groupes amino secondaires et tertiaires étant non supérieur à 0,8, de préférence non supérieur à 0,5.

4. Composition selon la revendication 3, **caractérisé en ce que** les organosilanes (A) contiennent chacun au moins un substituant non hydrolysable qui comporte une unité polyalkylène-amine pourvue d'au moins deux groupes amino, de préférence au moins trois groupes amino, les unités alkylènes ne comportant de préférence pas plus de cinq atomes de carbone, de manière particulièrement préférée pas plus de quatre atomes de carbone.

5. Composition selon l'une ou plusieurs des revendications 3 à 5, **caractérisée en ce que** les organosilanes (A) choisi parmi les aminosilanes ayant la formule structurelle générale (I) :
H₂N-[(CH₂)ₘNH]_{y}(CH₂)ₙ-Si-X₃ (I)
les substituants X étant choisi chacun indépendamment parmi les groupes alkoxy ne comportant pas plus de quatre, de préférence pas plus de deux, atomes de carbone,
m et n étant chacun indépendamment un nombre entier dans la gamme allant de 1 à 4 et y étant un nombre entier dans la gamme allant de 0 à 8, de préférence dans la gamme allant de 1 à 5.

6. Composition selon l'une ou plusieurs des revendications précédentes, **caractérisée en ce que** le rapport molaire silicium de verre soluble sur silicium d'organosilanes comportant chacun au moins un substituant hydrolysable est non inférieur à 2, de préférence non inférieur à 2,5, et de préférence non supérieur à 6, de façon particulièrement préférée non supérieur à 5.

7. Composition selon l'une ou plusieurs des revendications précédentes, **caractérisée en ce que** le rapport molaire silicium d'organosilanes (A) sur silicium d'organosilanes comportant chacun au moins un substituant hydrolysable, est non inférieur à 0,8, de préférence non inférieure à 0,9.

8. Concentré à base d'eau contenant
a) de 15 à 50% en poids par rapport à SiO₂ du verre soluble avec un rapport molaire SiO₂ sur M₂O d'au moins 3:2, mais non supérieur à 7:1, M étant choisi parmi les métaux alcalins et/ou les composés d'ammonium quaternaires ;
b) de 2 à 20% en poids .par rapport à l'élément silicium des organosilanes (A) qui comportent chacun au moins un substituant hydrolysable qui est éliminé lors de l'hydrolyse sous forme d'alcool qui a un point d'ébullition inférieur à 100°C, et qui portent au niveau de l'atome de silicium respectif un à trois substituants non hydrolysables qui comportent au moins un groupe amino primaire, le nombre total de substituants au niveau des atomes de silicium respectifs des organosilanes (A) étant de quatre ;
c) pas plus de 5% en poids par rapport à l'élément silicium d'organosilanes, comportant chacun au moins un substituant hydrolysable, qui ne sont cependant pas des organosilanes (A) ;
d) pas plus de 1% en poids par rapport à l'élément silicium d'organosilanes, comportant de tels substituants hydrolysables, qui libèrent lors de leur hydrolyse des halogénures d'hydrogène ;
e) pas plus de 1% en poids par rapport à l'élément aluminium de sels d'aluminium solubles dans l'eau,
f) pas plus de 0,2% en poids par rapport à l'élément silicium de silanes, comportant chacun quatre substituants hydrolysables,
le rapport molaire groupes amino primaires des organosilanes sur atomes de silicium du verre soluble et d'organosilanes, qui comportent chacun au moins un substituant hydrolysable, étant d'au moins 0,14, mais non supérieur à 0,3.

9. Procédé de prétraitement de produits semi-finis métalliques avant formage pour donner un composant métallique et de revêtement du composant avec un apprêt organique, **caractérisé en ce qu'**au moins une partie des surfaces métalliques du produit semi-fini est mise en contact avec un concentré dilué dans de l'eau selon la revendication 8 de telle sorte qu'il en résulte sur cette partie des surfaces métalliques du produit semi-fini un film liquide qui forme, après séchage, sur cette partie des surfaces métalliques, un revêtement de couche d'au moins 5 mg/m², de préférence d'au moins 20 mg/m², mais non supérieur à 300 mg/m², de préférence non supérieur à 100 mg/m², par rapport à l'élément silicium.

10. Procédé selon la revendication 9, **caractérisé en ce que** les produits semi-finis métalliques sont fabriqués à partir d'aluminium et de ses alliages ou présentent des revêtements métalliques, allié à l'aluminium, sur de l'acier.
